# FASCICULE DE BREVET EUROPEEN

(11) **EP 2 271 532 B1**
(45) Date de publication et mention de la délivrance du brevet: **14.12.2016**
(21) Numéro de dépôt: 08869584.6
(22) Date de dépôt: 17.12.2008
(51) Int. Cl.: B60W 20/00, B60W 30/18, B60W 10/08, B60W 10/26

(54) **PROCEDE DE CONTROLE DES ACCELERATIONS D'UN VEHICULE HYBRIDE**
VERFAHREN ZUR STEUERUNG DER BESCHLEUNIGUNG EINES HYBRIDFAHRZEUGS
METHOD FOR ACCELERATION CONTROL OF A HYBRID VEHICLE

(30) Priorité: 09.01.2008 FR 0850098
(43) Date de publication de la demande: 12.01.2011
(73) Titulaire: Peugeot Citroën Automobiles SA, 78140 Vélizy-Villacoublay (FR)
(72) Inventeur: BESNARD, Sébastien, F-92330 Sceaux (FR); ROBART, Nicolas, F-92130 Issy Les Moulineaux (FR)
(86) Numéro de dépôt international: PCT/FR2008/052347
(87) Numéro de publication internationale: WO 2009/087327

(56) Documents cités:
- DE-A1- 10 128 758
- DE-A1-102005 024 403
- US-B1- 6 314 347

## Description

La présente invention concerne un procédé de contrôle des accélérations d'un véhicule hybride.

Les véhicules automobiles hybrides utilisent des machines électriques pour entraîner la boîte de vitesses et transmettre le couple moteur aux roues motrices des véhicules. Ainsi, la chaîne de traction d'un véhicule hybride comporte un moteur thermique couplé à au moins une machine auxiliaire électrique. Une machine électrique de traction peut par exemple être insérée en série entre l'embrayage et la boîte de vitesse.
Les véhicules hybrides possèdent donc deux réservoirs d'énergie distincts, une batterie haute tension et un réservoir d'essence par exemple. La batterie ou un ensemble de batteries, de forte puissance, alimente en énergie électrique la (ou les) machine(s) de traction via un onduleur. Ce dernier permet de transformer la tension continue en sortie de batterie en tension alternative apte à entraîner le rotor de la machine électrique.
On considère que chacun des réservoirs, la batterie et le réservoir d'essence, constitue une source d'énergie, et cette énergie peut être transmise aux roues du véhicule afin de le faire avancer. Le lien en puissance vers l'un des réservoirs d'énergie est réversible, et il est alors possible soit d'utiliser l'énergie contenue dans ce réservoir pour faire avancer le véhicule, soit d'utiliser l'énergie cinétique du véhicule lors d'une décélération afin de remplir le réservoir, notamment la batterie.
Classiquement dans un véhicule hybride thermique-électrique, lors d'une demande d'accélération importante, les deux sources d'énergie sont utilisées conjointement afin d'obtenir une performance optimale du véhicule. Lorsque ensuite le véhicule décélère, la ou les machines électriques fonctionnent alors en mode générateur afin de recharger la batterie haute tension. Dans la majorité des cas, l'énergie ainsi récupérée ne compense pas la totalité de l'énergie dépensée lors de l'accélération. Dans le cas où on souhaite à nouveau accélérer fortement le véhicule, il est possible que l'énergie disponible dans cette batterie ne soit plus suffisante pour assurer la totalité de l'accélération. Le niveau d'accélération qui est alors obtenu est inférieur à celui obtenu précédemment. La prestation du véhicule n'est alors plus robuste vis-à-vis de l'accélération.

Un but de l'invention est notamment de proposer une stratégie permettant d'assurer la robustesse de la prestation d'un véhicule hybride lors de demandes d'accélérations élevées. A cet effet, l'invention a pour objet un procédé de contrôle des accélérations d'un véhicule hybride comportant au moins deux réservoirs d'énergie distincts dont une batterie électrique alimentant au moins une machine électrique du véhicule et apte à être rechargée par une machine électrique lors d'une phase de décélération, dans lequel à un instant donné on estime (43, 44) :
- l'énergie (E_{bat}^{decel}) pouvant être récupérée par la batterie lors d'une prochaine décélération et ;
- l'énergie stockée (E_{bat}^{mesurée}) dans la batterie ;
la somme (E_{bat}^{future}) de ces deux énergies étant comparée (46) à un seuil (E_{bat}^{seuil}) prédéterminé, l'autorisation de délivrer une surpuissance électrique à la machine électrique par la batterie dans une phase d'accélération étant accordée si la somme est supérieure au seuil.
L'énergie (E_{bat}^{decel}) pouvant être récupérée est par exemple estimée en fonction de la vitesse du véhicule à l'instant donné, notamment à partir des caractéristiques du véhicule et d'hypotèses sur les profils de décélérations futurs.
L'énergie stockée dans la batterie est par exemple estimée à partir de mesures effectuées par des capteurs de charge (42).
La surpuissance est par exemple fournie pour une basse vitesse du véhicule. On définit par exemple une vitesse maximale au-delà de laquelle on empêche la délivrance de la surpuissance électrique.
La vitesse maximale est par exemple déterminée de manière à équilibrer les durées d'accélération et de décélération du véhicule à partir d'un niveau de décélération maximal considéré.

L'invention a notamment pour principaux avantages qu'elle permet d'améliorer la pérennité des performances des véhicules hybrides, qu'elle permet une réduction du surcoût des véhicules hybrides par la possibilité d'utiliser des batteries plus petites et donc moins chères, et qu'elle est simple à mettre en oeuvre.

D'autres caractéristiques et avantages de l'invention apparaîtront à l'aide de la description qui suit faite en regard de dessins annexés qui représentent :
- la figure 1, une illustration de l'évolution du niveau de charge d'une batterie en fonction du temps, notamment à la suite de plusieurs accélérations d'un véhicule ;
- la figure 2, une illustration de deux exemples de profils de vitesse avec une accélération moyenne identique, entre un premier instant t0 et un deuxième instant t1 ;
- la figure 3, une évolution de la puissance électrique d'une batterie en fonction du temps ;
- la figure 4, un exemple d'application d'une stratégie selon l'invention.

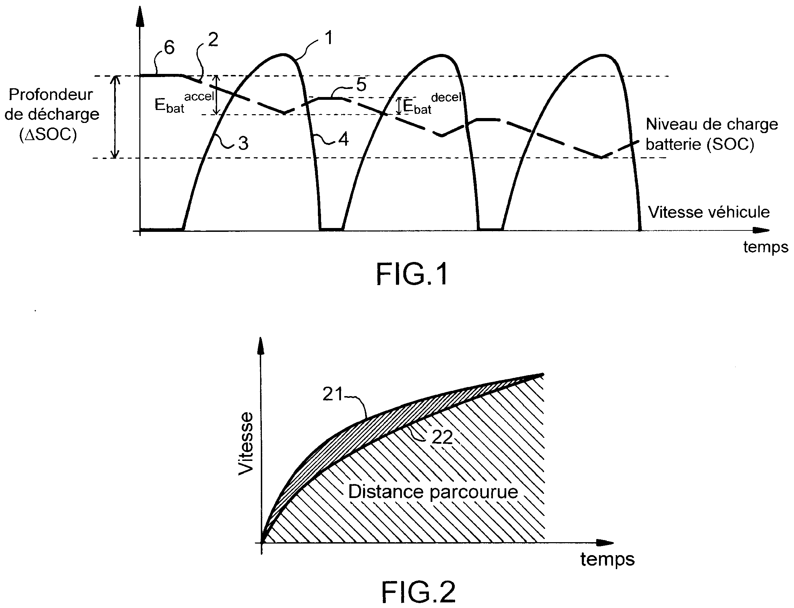

La figure 1 illustre l'évolution du niveau de charge d'une batterie en fonction du temps, plus particulièrement à la suite de plusieurs accélérations du véhicule, dans un environnement selon l'art antérieur. Une première courbe 1 représente la valeur de la vitesse en fonction du temps, cette courbe présente à titre d'exemple trois pointes qui correspondent à trois accélérations successives. Au cours d'une phase d'accélération 3 la batterie se décharge puis elle se recharge lors de la phase de décélération 4 qui suit. Cependant, elle se recharge à un niveau 5 inférieur à celui de départ 6. Ainsi au fur et à mesure des accélérations, le niveau de la batterie baisse. Cette baisse peut être définie par une grandeur appelée « profondeur de décharge » et notée ΔSOC.

La stratégie de l'invention se base sur trois principes généraux dont l'objectif est de rendre la prestation d'accélération robuste dans le temps et optimale au regard de l'énergie dépensée. Cet objectif est atteint en équilibrant l'énergie dépensée lors des accélérations avec celle qui est récupérée lors des décélérations. Ainsi pour une certaine vitesse initiale du véhicule, le niveau d'énergie dans l'organe de stockage, la batterie haute tension par exemple, est équivalent entre le moment qui précède chacune des accélérations successives du véhicule, contrairement aux différences de niveaux 5, 6 de la figure 1 par exemple. Pour atteindre ces résultats, les trois principes appliqués sont par exemple les suivant :
- utiliser de la puissance électrique à basse vitesse pour optimiser la performance vis-à-vis de l'énergie dépensée ;
- imposer une puissance électrique en phase de décélération plus élevée qu'en phase d'accélération pour compenser l'effet des pertes ;
- limiter l'énergie dépensée lors des phases d'accélération à la quantité d'énergie récupérable lors d'une décélération.
Ces trois principes peuvent être appliqués soit de manière séparée, soit conjointement. Leurs effets en vue d'améliorer la robustesse des prestations s'ajoutant les uns aux autres.

La figure 2 illustre le premier principe. Plus particulièrement, la figure 2 présente deux exemples de profils de vitesse avec une accélération moyenne identique, entre un premier instant t0 et un deuxième instant t1. L'axe des ordonnées représente les vitesses et l'axe des abscisses représente le temps.
Une première courbe 21 correspond à un premier profil de vitesse et une deuxième courbe 22 correspond à un deuxième profil de vitesse. Les vitesses des deux profils sont les même au premier instant t0. Les vitesses croissent selon les deux profils pour atteindre une même vitesse au deuxième instant t1. L'intégrale des deux courbes 21, 22 indique la distance parcourue entre les deux instants t0, t1.
La figure 2 montre que, lors d'une accélération, pour une même énergie dépensée et pour atteindre la meilleure prestation, il est préférable d'accélérer le véhicule à basse vitesse. Les deux profils 21, 22 correspondent à des accélérations moyennes égales. L'énergie dépensée entre les instants t0 et t1 est donc similaire pour les deux cas. Sur le premier profil 21, correspondant à la courbe haute, l'accélération est plus élevée au départ tandis que sur le deuxième profil 22 l'accélération est plus progressive et devient plus élevée lorsqu'on s'approche de l'instant t1. La distance parcourue étant obtenue en intégrant chacun des profils de vitesse, la distance parcourue est proportionnelle à l'aire située sous chacune des courbes de vitesse. La distance parcourue est plus importante avec le premier profil 21 pour lequel l'accélération est plus élevée dès les premiers instants. Pour optimiser la performance vis-à-vis de l'énergie dépensée, l'invention utilise avantageusement dans ce premier principe plus de puissance à basse vitesse et moins à haute vitesse.

Dans le deuxième principe, l'invention impose une puissance électrique en phase de décélération plus élevée qu'en phase d'accélération pour compenser l'effet des pertes. Il est en effet possible de définir une vitesse du véhicule maximale pour l'application d'une surpuissance électrique, appelée puissance de boost par la suite, en complément de celle du moteur thermique. Le choix de cette vitesse se fait de manière à équilibrer les durées d'accélération et de décélération du véhicule à partir d'un niveau de décélération maximal considéré. Lorsque les durées d'accélération et de décélération sont équilibrées, il est possible de compenser les effets de pertes dans la chaîne de transmission située entre la roue du véhicule et le réservoir en appliquant une puissance plus élevée en phase de récupération qu'en phase d'accélération.

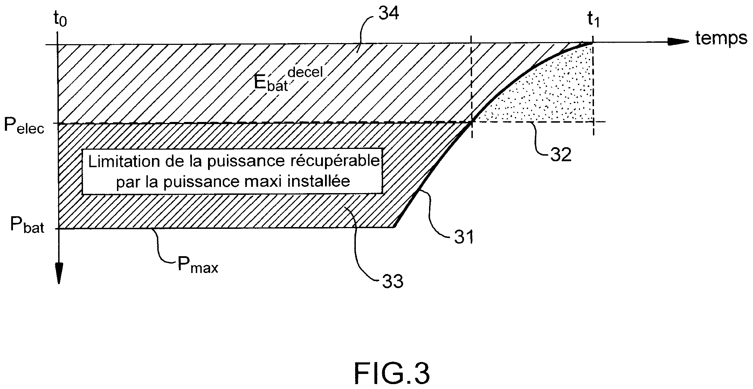

La figure 3 illustre le troisième principe utilisé par l'invention. Dans ce troisième principe, l'invention limite l'énergie dépensée, lors des phases d'accélération, à la quantité d'énergie récupérable lors d'une décélération.
La connaissance des caractéristiques du véhicule permet de calculer la puissance électrique récupérable en fonction de la vitesse du véhicule. En faisant une hypothèse sur le niveau de décélération du véhicule, il est donc possible d'évaluer la quantité d'énergie qui sera récupérée lors d'une décélération à venir.
La figure 3 présente par une première courbe 31 la puissance électrique en fonction du temps fournie par la batterie à partir de l'instant de démarrage t0. La puissance maximale disponible est limitée à une valeur Pmax. L'aire comprise entre la limite Pmax et la courbe 31 représente l'énergie dépensée lors de la phase d'accélération.
Une quantité d'énergie E_{bat}^{decel} est la quantité d'énergie récupérable lors d'une phase de décélération. Elle est limitée par une droite 32 d'ordonnée Pélec représentant la puissance correspondante en fonction du temps. La puissance Pmax est définie pour que l'aire 33 comprise entre les droites Pélec et Pmax et la courbe 31 soit égale à l'énergie récupérable E_{bat}^{decel} correspondant à l'aire délimitée par la droite Pélec 32, l'axe des temps et le segment de droite d'abscisse t1, t1 étant l'instant où la puissance électrique Pélec devient nulle.

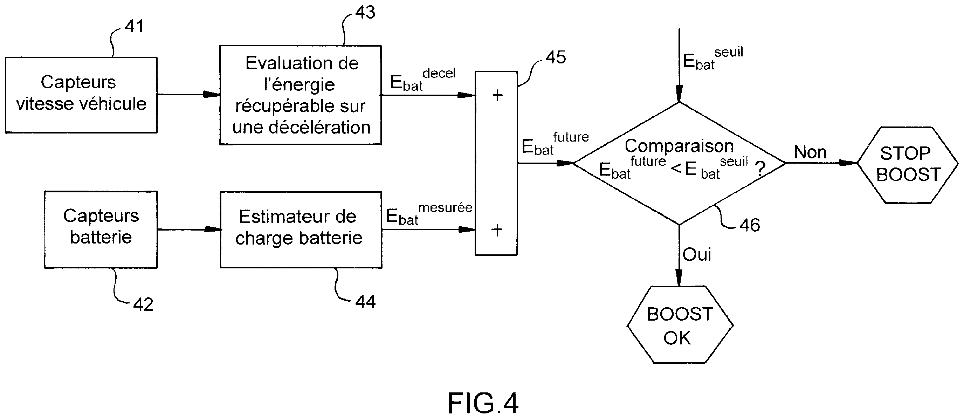

La figure 4 illustre un exemple d'application des principes exposés précédemment. La stratégie d'application est par exemple mise en oeuvre à l'aide de capteurs 41, 42 et d'un calculateur embarqué. Une première série de capteurs 41 permet de déterminer la vitesse du véhicule et une deuxième série de capteurs 42 permet d'estimer la charge de batterie.
La stratégie selon l'invention permet d'autoriser ou non l'application d'une puissance de boost électrique dépendant de la vitesse du véhicule et des informations renvoyées par les capteurs de batterie. En application du troisième principe ci-dessus, on estime ainsi 43 l'énergie E_{bat}^{decel} qui pourra être récupérée lors d'une prochaine décélération et on estime 44 l'énergie E_{bal}^{mesurée} stockée dans la batterie à un instant t. On effectue 45 la somme E_{bat}^{future} de ces deux énergies puis on compare 46 cette somme à un seuil énergétique E_{bat}^{seuil} prédéterminé. On autorise ou non l'application d'un boost électrique suivant que cette somme E_{bat}^{future} est inférieure ou supérieure à ce seuil. Ce seuil énergétique E_{bat}^{seuil} est défini par la quantité d'énergie de la batterie qui est nécessaire pour réaliser une accélération du véhicule conforme à un objectif fixé, depuis l'arrêt jusqu'à la vitesse maximale du véhicule.
Un intérêt de la stratégie selon l'invention est notamment de disposer d'un niveau d'énergie dans la batterie au moins égal au seuil E_{bat}^{seuil} à chaque fois que le véhicule est à l'arrêt. Il est ainsi possible d'assurer une performance robuste vis-à-vis des demandes du conducteur d'une accélération à une autre. L'invention permet ainsi d'améliorer la pérennité des véhicules hybrides.
Elle permet enfin de réduire le coût des véhicules hybrides par l'utilisation de batteries plus petites et donc moins chères.

## Revendications

1. Procédé de contrôle des accélérations d'un véhicule hybride comportant au moins deux réservoirs d'énergie distincts dont une batterie électrique alimentant au moins une machine électrique du véhicule et apte à être rechargée par une machine électrique lors d'une phase de décélération, **caractérisé en ce qu'**à un instant donné on estime (43, 44) :
- l'énergie (E_{bat}^{decel}) pouvant être récupérée par la batterie lors d'une prochaine décélération et ;
- l'énergie stockée (E_{bat}^{mesurée}) dans la batterie ;
la somme (E_{bat}^{future}) de ces deux énergies étant comparée (46) à un seuil (E_{bat}^{seuil}) prédéterminé, l'autorisation de délivrer une surpuissance électrique à la machine électrique par la batterie dans une phase d'accélération étant accordée si la somme est supérieure au seuil, et l'énergie (E_{bat}^{decel}) pouvant être récupérée est estimée en fonction de la vitesse du véhicule à l'instant donné, à partir des caractéristiques du véhicule et d'hypotèses sur les profils de décélérations futurs.

2. Procédé selon la revendication précédente, **caractérisé en ce que** l'énergie stockée dans la batterie est estimée à partir de mesures effectuées par des capteurs de charge (42).

3. Procédé selon l'une quelconque des revendications précédentes, **caractérisé en ce que** la surpuissance est fournie pour une basse vitesse du véhicule.

4. Procédé selon l'une quelconque des revendications précédentes, **caractérisé en ce que** l'on définit une vitesse maximale au-delà de laquelle on empêche la délivrance de la surpuissance électrique.

5. Procédé selon la revendication 4, **caractérisé en ce que** la vitesse maximale est déterminée de manière à équilibrer les durées d'accélération et de décélération du véhicule à partir d'un niveau de décélération maximal considéré.

## Patentansprüche

1. Verfahren zum Steuern der Beschleunigungen eines Hybridfahrzeugs, das mindestens zwei getrennte Energiespeicher umfasst, darunter eine elektrische Batterie, die mindestens eine Elektromaschine des Fahrzeugs versorgt und geeignet ist, um von einer elektrischen Maschine bei einer Verlangsamungsphase aufgeladen zu werden, **dadurch gekennzeichnet, dass** man in einem gegebenen Augenblick Folgendes schätzt (43, 44) :
- die Energie (E_{bat}^{decel}), die von der Batterie bei einer nächsten Verlangsamung zurückgewonnen werden kann, und
- die in der Batterie gespeicherte Energie (E_{bat}^{mesurée}),
wobei die Summe (E_{bat}^{future}) dieser zwei Energien mit einem vorbestimmten Schwellenwert (E_{bat}^{seuil}) verglichen wird (46), wobei die Genehmigung zum Liefern einer elektrischen Überleistung zu der elektrischen Maschine durch die Batterie in einer Beschleunigungsphase gewährt wird, wenn die Summe größer ist als der Schwellenwert, und wobei die Energie (E_{bat}^{decel}), die zurückgewonnen werden kann, in Abhängigkeit von der Geschwindigkeit des Fahrzeugs in dem gegebenen Augenblick ausgehend von Merkmalen des Fahrzeugs und Annahmen hinsichtlich der zukünftigen Verlangsamungsprofile geschätzt wird.

2. Verfahren nach dem vorhergehenden Anspruch, **dadurch gekennzeichnet, dass** die in der Batterie gespeicherte Energie ausgehend von Messungen geschätzt wird, die von Ladesensoren (42) ausgeführt werden.

3. Verfahren nach einem der vorhergehenden Ansprüche, **dadurch gekennzeichnet, dass** die Überleistung für eine niedrige Geschwindigkeit des Fahrzeugs geliefert wird.

4. Verfahren nach einem der vorhergehenden Ansprüche, **dadurch gekennzeichnet, dass** man eine maximale Geschwindigkeit definiert, über die hinaus man das Liefern der elektrischen Überleistung verhindert.

5. Verfahren nach Anspruch 4, **dadurch gekennzeichnet, dass** die maximale Geschwindigkeit derart bestimmt wird, dass die Beschleunigungs- und Verlangsamungszeiten des Fahrzeugs ab einem maximalen betrachteten Verlangsamungspegel ausgeglichen werden.

## Claims

1. A method for acceleration control of a hybrid vehicle comprising at least two separate power supplies including an electric battery powering at least one electric machine of the vehicle and capable of being recharged by an electric machine upon a deceleration phase, **characterized in that** at a given moment an estimation is carried out (43, 44) of:
- the energy (E_{bat}^{decel}) that can be recovered by the battery upon a next deceleration and;
- the energy (E_{bat}^{mesurée}) stored in the battery;
the sum (E_{bat}^{future}) of these two energies being compared (46) to a predetermined threshold (E_{bat}^{seuil}), the authorisation to deliver an additional electric power to the electric machine from the battery during an acceleration phase being granted if the sum is higher than the threshold, and the energy (E_{bat}^{decel}) that can be recovered is estimated as a function of the speed of the vehicle at the given moment, from characteristics of the vehicle and hypotheses concerning the future deceleration profiles.

2. The method according to the preceding claim, **characterized in that** the energy stored in the battery is estimated from measurements carried out by load sensors (42).

3. The method according to any one of the preceding claims, **characterized in that** the additional power is supplied for a low speed of the vehicle.

4. The method according to any one of the preceding claims, **characterized in that** a maximum speed is defined, beyond which the delivery of the additional electric power is prevented.

5. The method according to Claim 4, **characterized in that** the maximum speed is determined so as to balance the durations of acceleration and deceleration of the vehicle from a maximum deceleration level concerned.
